# EUROPEAN PATENT SPECIFICATION

(11) **EP 1 288 935 B1**
(45) Date of publication and mention of the grant of the patent: **27.09.2006**
(21) Application number: 02255542.9
(22) Date of filing: 07.08.2002
(51) Int. Cl.: G11B 15/60

(54) **A tape guide for reducing lateral tape movement**
Bandführungsvorrichtung zur Reduzierung von seitliche Bandbewegung
Guide de bande pour réduire le mouvement de bande latéral

(30) Priority: 14.08.2001 US 930120
(43) Date of publication of application: 05.03.2003
(73) Proprietor: QUANTUM CORPORATION, San Jose, CA 95110 (US)
(72) Inventor: Ken, Hanscom, Holliston, Massachusetts 01746 (US)
(74) Representative: Charig, Raymond Julian

(56) References cited:
- CH-A- 378 058
- US-A- 3 037 290
- US-A- 4 390 119
- US-A- 4 427 166
- US-A- 4 466 582
- US-A- 4 491 891
- US-A- 5 088 172
- PATENT ABSTRACTS OF JAPAN vol. 1998, no. 09, 31 July 1998 (1998-07-31) & JP 10 106074 A (HITACHI LTD), 24 April 1998 (1998-04-24)

## Description

### FIELD OF THE INVENTION

The present invention relates generally to digital storage systems. More specifically, the present invention relates generally to a guide assembly for reducing unwanted movement of storage tape during usage in a tape drive.

### BACKGROUND

Magnetic storage tapes are commonly used to store relatively large amounts of information in digital form. These storage tapes, also known as cartridges, have become increasingly efficient to use due to their low cost, portability, and substantial storage capacity. In contrast to hard disks that are relatively inaccessible within the hard disk drive assembly, the cartridge is easily removed from a tape drive, and can be economically transferred to remote locations for use in another tape drive.

A typical cartridge includes a tape having a substrate, a coating of magnetic recording material on one side of the substrate, and a high durability "back coating" on the other side of the substrate. The tape drive includes a head assembly having one or more write heads and one or more read heads for transferring data to and from the tape. More specifically, the magnetic fields emanating from the write head represent information to be stored as data in tracks on the tape. The magnetic fields cause changes, i.e. transitions, in the magnetic dipole orientation of the magnetic material on the tape during data writing. The read heads in turn read the fields of the stored transitions in a given track on the tape and generates a "read-back" signal representative of these transitions for later decoding and retrieving the stored data.

In one type of tape drive, the tape runs between a supply reel within the cartridge and a take-up reel within the tape drive. A guide assembly, which typically includes a set of tape rollers, supports the tape near the head assembly. This function must be performed accurately and consistently to avoid tape reading and writing errors. Moreover, the tape must be maintained approximately at a predetermined speed as it streams across the head assembly during reading or writing in order to avoid errors. Typically, a separate drive motor is used to rotate each reel under control of a motor controller circuit which receives information from a tachometer coupled to a roller, with the roller placed in the tape travel path. The tape streaming across the roller surface rotates the roller which motion is sensed by the tachometer. The tachometer then generates a control signal assumed to be representative of tape speed, and the control signal is used by the motor controller circuit to regulate the speed of the drive motors and hence the tape speed.

However, if the tape slips on the tachometer roller, then an incorrect tape speed signal will be generated by the tachometer, because the tape will be moving faster than the roller. This slippage error in the tape speed signal, i.e. disparity between tape and roller speed, is problematic. The motor controller will accelerate the drive motors in response to the incorrectly low tape speed signal, and the tape will be accelerated. This acceleration increases the slippage error between the tape and the roller because the roller is even less likely to capture the tape at higher tape speed. Thus, this slippage error continues to increase each time the motor controller updates the motor drive output based on the erroneous tape speed signal. This leads to a "runaway" condition and can cause a system shutdown. Tape slippage can also cause difficulty in location of data on the tape.

"Lateral tape motion", also sometimes referred to herein as "LTM", is defined as any deviation from the perfect plane path of the tape near the head assembly as the tape travels from the cartridge to the take-up reel, or from the take-up reel to the cartridge. A measure of lateral tape motion is the peak-to-peak distance that the tape moves perpendicular to a prescribed longitudinal direction of motion of the tape past the head assembly. Causes of lateral tape motion include any planar misalignment of the cartridge, the rollers, and or the take-up reel. Minimal perpendicular misalignment in all directions is particularly important to avoid lateral tape motion. Further, any surface condition or anomaly that tends to inflict a deviation from the perfect path can cause lateral tape motion. For example, surface conditions resulting from roller design or contamination and vibration can result in excessive lateral tape motion.

In order to increase storage density for a given cartridge, thinner tape on the order of less than 5 µm (0.0002 inches) can be used to provide a greater length of tape on a given supply reel. Also, data can be written on the tape in any one or more of a plurality of parallel tracks disposed across the width of the tape as the tape streams by the head assembly along the tape path. Today's cartridges utilize tape with more densely positioned data tracks. By positioning the tracks closer together, more data can be stored in a given length of tape. The addition of more tracks leads to a decrease in the physical separation between the tracks, thereby lowering the "guard band" or margin of safety between the tracks. A lower guard band requires a decreased lateral tape motion during operation in order to minimize reading and writing errors.

In addition, if the data portion of the tape is damaged in any way, data retrieval errors must be considered. These errors are commonly referred to as "drop-outs", since the data on the damaged part of the tape is eliminated from the retrieved data. Such damage can be in the form of tape puckering, warping, etc.

As provided above, the magnetic tape travels in a path formed against a series of conventional rollers. The rollers guide the tape along the path between the supply reel and the take-up reel, past the head assembly. For multi-track tape drives, the head assembly typically moves to the appropriate vertical location along the width of the tape for reading data from and/or writing data to a particular track on the tape.

Unfortunately, a thin film of air flowing between the streaming tape and the roller can cause the tape to "slip" over the rollers. This film of air can cause the tape to be lifted slightly off of the rollers causing a reduction in friction and an increase in the likelihood of additional tape slippage. Increased slippage can result in lateral tape motion relative to the rollers, and consequently, the head assembly. Slippage relative to the rollers can also damage the tape.

Attempts to minimize slippage have included venting the air film between each of the rollers and the moving tape. Such attempts have involved the inclusion of an extensive system of continuous circumferential grooves (i.e. grooves oriented in the direction of tape travel across the roller) that encircle a perimeter surface of the roller in order to provide channels for venting the air. Rollers with grooves disposed about the entire circumference of the roller surface, vent air away from the roller surface. Unfortunately, the extensive groove patterns can cause a permanent longitudinal deformation of the tape when one portion of a track repeatedly comes in contact with a groove. This condition is known as magnetic "print through".

Further attempts to vent the air include providing rollers with continuous grooves that are oriented slightly obliquely or helically to the direction of tape travel. Such rollers have not been entirely satisfactory, however. Specifically, the grooves can cause print through because of the repetitious pattern. Further, the oblique grooves can cause a condition known as "directional continuity shift" or "DC shift". DC shift occurs when orientation of the groove pattern tends to cause the tape to move laterally in one direction, i.e. perpendicular to the direction of the moving tape. Reversal of the tape direction then causes an abrupt change in the lateral tape motion, so that the tape is moving laterally in the opposite direction. The result of DC shift is that a track of data in one direction is not at the precise vertical location when read in the opposite direction.

Additionally, tapes that are continually subjected to contact with grooves at a particular tape location can result in the tape "caving" into the grooves, causing deformation of the tape. Specifically, thin magnetic recording tape such as tape having a thickness of 5 µm (0.0002 inches) or less, are typically much more susceptible to damage than tapes with a greater thickness.

In light of the above, the need exists to provide an improved guide assembly that can decrease slippage between the tape and the tape rollers of a tape drive. A further need exists to provide a guide assembly that can increase the amount of friction between the tape and the tape rollers, without increasing the incidence oi print through, in order to decrease errors during reading and writing of data. Still another need exists to provide a guide assembly that can accurately and consistently support the tape near the head assembly of a tape drive. A still further need exists to provide a guide assembly that reduces lateral tape motion and directional continuity shift of the tape during reading and writing of data. Yet another need exists to provide a tape drive that is relatively cost efficient to manufacture and utilize.

Swiss patent No. 378058 discloses a method for improvement of the mechanical tangential contact between moving tapes and their guidance means. This method is characterised in that the surface contact between tape and guidance means is partially interrupted by the intermittent format of the surface of the guidance means. A roller serving as guidance means for a tape has two correspondingly shaped flange parts for lateral guidance of the tape. The peripheral surface of the roller is provided with recesses or grooves which form 20-50% of the total area of the peripheral surface. Periodically repeated recesses are arranged at equal distances on the cylindrical periphery of the roller. Grooves are disclosed which may run parallel or at an angle to the roller axis.

### SUMMARY

The present invention is directed to a guide assembly according to claim 1, that guides a storage tape in a tape drive that satisfies these needs. The guide assembly includes a first roller having a perimeter surface, a circumference, a longitudinal axis and one or more grooves. The one or more grooves in the first roller are disposed into the perimeter surface of the first roller. Importantly, at least one of the grooves is discontinuous, and has a groove length that is less than the circumference of the first roller. This allows air to vent between storage tape and the first roller in order to inhibit lateral tape motion and directional continuity shift. Stated another way, the first roller includes one or more grooves of a specified length, width, depth and orientation, for property supporting the storage tape near a head assembly of the tape drive. This improves the accuracy of the tape drive.

Preferably, the first roller includes a substantially spool-shaped portion that includes the perimeter surface, the circumference and the grooves. Typically, the grooves of the first roller have a groove depth of between approximately 2.5 µm (.0001 inches) and 2.5 mm (0.1 inches). Moreover, the groove depth can vary along the length of each groove. Further, as provided herein, each of the grooves of the first roller have a groove length of between approximately 0.1 percent and ninety percent of the circumference of the first roller and even more preferably between one percent and fifty percent of the circumference of the first roller. Further, each of the grooves have groove width that can vary between approximately 25 µm (0.001 inches) and 5 mm (0.2 inches). Preferably, the guide assembly includes a plurality of additional rollers that are substantially similar in size, shape and configuration to the first roller.

In one embodiment of the present invention, the grooves of the first roller are aligned substantially parallel to the circumference of the first roller. With this design, the grooves tend to inhibit the storage tape from moving laterally, i.e. parallel to the longitudinal axis of the first roller.

In a further embodiment of the present invention, the first roller includes grooves that are semi-randomly distributed on the perimeter surface of the first roller. "Semi-random" distribution means that although the grooves can randomly vary in length and location on the perimeter surface, the pattern is repeated on the perimeter surface. With this design, the incidence of print through of the storage tape is decreased, while maintaining and/or increasing the level of friction between the storage tape and the first roller. As a consequence, the tape drive can operate with fewer errors, and less damage is likely to occur to the storage tape.

The present invention is also directed to a method according to claim 18, for manufacturing a roller for use in a guide assembly of the tape drive. The method includes the steps of providing a substantially spool-shaped roller having a circumference and a perimeter surface, and creating one or more spaced-apart grooves into the perimeter surface, at least one groove having a groove depth that varies along the length of each groove.

Additionally, the present invention is directed toward a method for reducing lateral tape motion of a storage tape for use in a tape drive, the method including the step of providing a tape drive having a guide assembly that includes a first roller having a perimeter surface, a circumference, and one or more spaced-apart, discontinuous grooves disposed into the perimeter surface, at least one of the grooves having a groove length that is less than the circumference of the roller.

### BRIEF DESCRIPTION OF THE DRAWINGS

The novel features of this invention, as well as the invention itself, both as to its structure and its operation, will be best understood from the accompanying drawings, taken in conjunction with the accompanying description, in which similar reference characters refer to similar parts, and in which:
Figure 1 is an illustration view of a portion of a tape drive and a cartridge, with a cover removed, having features of the present invention;
Figure 2 is a side view illustration of a portion of the tape drive and a portion of a tape;
Figure 3 is a perspective view of an embodiment of a first roller having features of the present invention;
Figure 4 is a top view of the first roller of Figure 3;
Figure 5 is a side plan view of the first roller of Figure 3;
Figure 6 is a side view of a portion of the first roller of Figure 3;
Figure 7 is a cross-sectional view of the first roller in Figure 3 taken at line 7-7; and
Figure 8 is a side plan view of another embodiment of a first roller having features of the present invention.

### DESCRIPTION

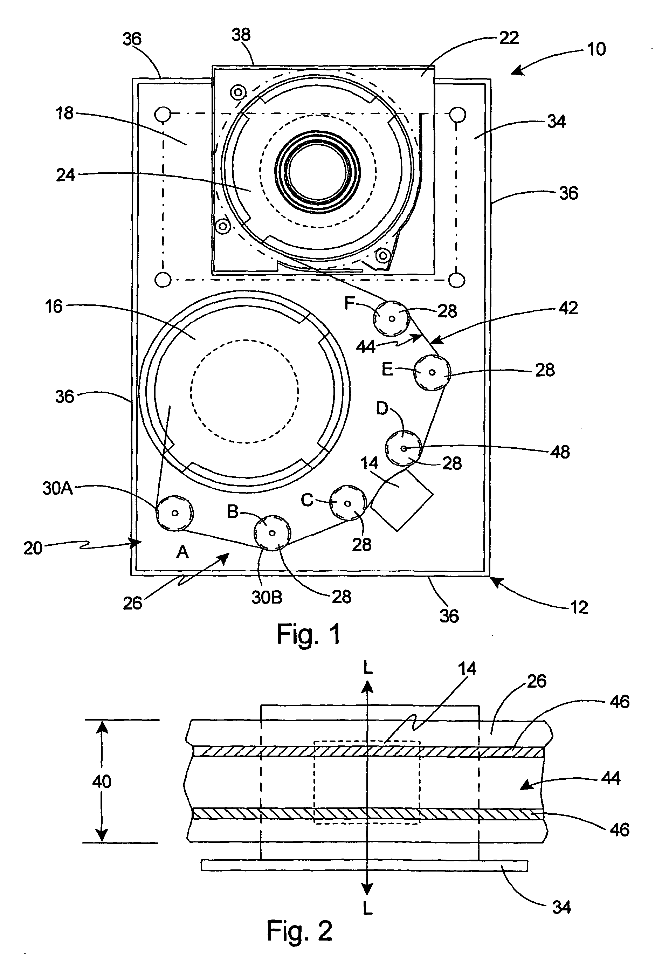

Referring initially to Figure 1, a tape drive 10 having features of the present invention includes a drive housing 12, a head assembly 14, a take-up reel 16, a cartridge receiver 18 (illustrated with dashed lines), and a guide assembly 20. The tape drive 10 is designed for use in conjunction with a cartridge 22 including a cartridge reel 24 and a storage tape 26 (sometimes referred to herein as "tape"). Preferably, the guide assembly 20 includes one or more tape rollers 28 including a first roller 30A and a second roller 30B for guiding the tape 26 along a tape path past the head assembly 14 and onto the take-up reel 16. The guide assembly 20 is uniquely designed to inhibit lateral tape motion ("LTM") during operation of the tape drive 10. Importantly, as provided below, one or more of the rollers 28 includes one or more grooves 32 to vent the air between the storage tape 26 and the roller 28. With this design, less slippage of the storage tape 26 occurs while traveling over the first roller 30A, resulting in fewer data transmission errors, as provided in greater detail below.

A detailed description of the various components of a tape drive 10, is provided in U.S. Patent No. 5,371,638, issued to Saliba, and assigned to Quantum Corporation, the Assignee of the present invention. Accordingly, only the structural aspects of the tape drive 10 which are particularly significant to the present invention are provided herein. Representative tape drives 10 are sold by Quantum Corporation, the assignee of the present invention, under the trademarks DLT^{™}4000 and DLT^{™}7000, for example.

The drive housing 12 retains the various components of the tape drive 10. The drive housing 12, illustrated in Figure 1, includes a base 34, four spaced apart side walls 36 and a cover (not illustrated in Figure 1 for clarity).

The cartridge 22 typically includes the storage tape 26 that stores data in a form that can be subsequently retrieved if necessary. The cartridge 22 can vary in size and shape. A magnetic storage tape 26 is commonly used in the cartridge 22 to store data in digital form. Referring to Figure 1, the cartridge 22 includes a substantially rectangular cartridge housing 38 that encloses the tape 26. Suitable cartridges 22 sold by Quantum Corporation include those under the trademark DLT^{™}.

The storage tape 26 typically has a tape width 40 of preferably at least approximately 12.7 mm (0.5 in). Alternately, for example, the storage tape 26 can have a tape width 40 of between approximately four millimeters to eight millimeters (4.0 mm-8.0 mm). The storage tape 26 can also be wider than 12.7 mm (0.5 in). The thickness of the storage tape 26 can likewise vary. Thicknesses of approximately 12.7 µm (0.0005 inch) are relatively common, although slightly thinner or thicker tape 26 can be used. In general, thinner tape 26 tends to be less rigid than thicker tape 26, which can lead to decreased control over movement of the tape 26. Because cartridges 22 are now being manufactured using relatively thin tape 26, i.e 12.7 µm (0.5 mil) or less, preventing lateral tape motion has become increasingly difficult.

As illustrated in Figures 1 and 2, the storage tape 26 includes a storage surface 42 (not illustrated in Figure 2) on one side of the storage tape 26 for storing data, and a guide surface 44 that contacts the tape rollers 28. The storage surface 42 directly faces and contacts the head assembly 14. The storage surface 42 is divided into a plurality of tracks 46. Each track 46 can be a linear pattern that extends the length of the storage tape 26. Alternately, for example, the data can be recorded in diagonal strips across the storage tape 26, as shown in Figure 2. The storage tape 26 is initially retained on the cartridge reel 24 of the cartridge 22.

As stated previously, the guide assembly 20 includes one or more tape rollers 28, including the first roller 30A, for guiding the storage tape 26 past the head assembly 14 and onto the take-up reel 16. For example, the guide assembly 20 illustrated in Figure 1 includes six tape rollers 28, designated A through F. However, the guide assembly 20 can include more or less than six tape rollers 28. The design of the first and second rollers 30A, 30B can vary depending upon the requirements of the tape drive 10 and the guide assembly 20. Any one of the six tape rollers 28 shown in Figure 1 can be the first roller 30A or the second roller 30B.

The tape rollers 28 of the guide assembly 20 are typically of like basic configuration, although one of the tape rollers 28 also functions as a tachometer roller (shown in Figure 1 as tape roller A). The tachometer roller generates a control signal that represents the tape movement, and the control signal is employed by the motor controller circuit (not shown) to regulate the speed of the drive motors (not shown) and hence the tape speed. Preferably, the first roller 30A is the tachometer roller to increase the accuracy of the readings from the tachometer roller. Some of the basic features of the tape rollers 28 including the tachometer roller are provided in U.S. Patent Nos. 5,088,172 and 5,199,168, both of which are issued to Daly. Accordingly, only structural aspects of the tape rollers 28 which are particularly significant to the present invention are provided herein.

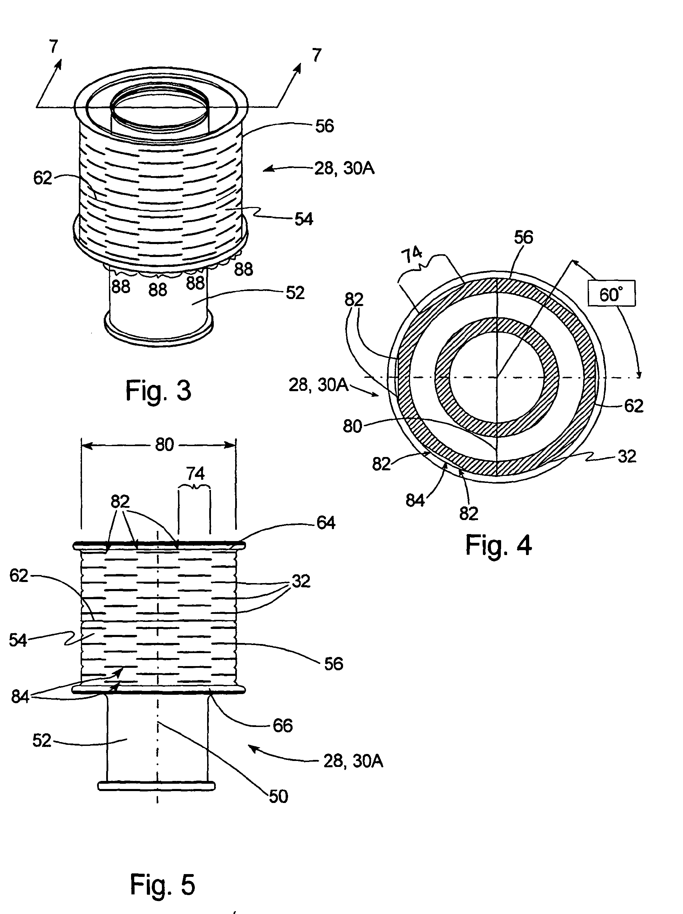

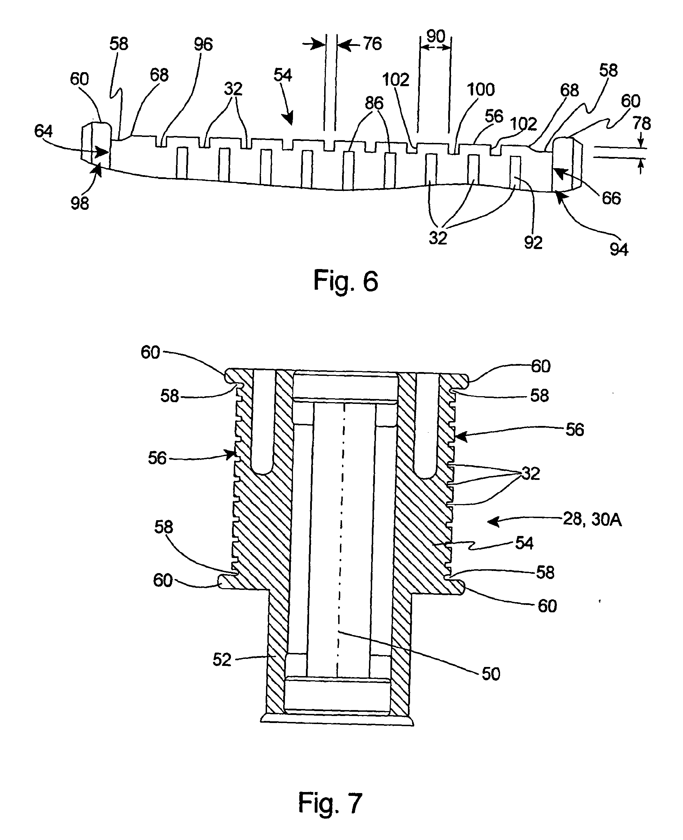

Figures 3-7 illustrate a preferred embodiment of the first roller 30A. The second roller 30B and the rest of the rollers 28 can have similar configurations. Preferably, the first roller 30 is rotatably mounted to the drive housing 12 on a roller mount 48 (illustrated on Figure 1). Typically, the first roller 30A includes a longitudinal axis 50 (shown in phantom on Figures 5 and 7). The first roller 30A preferably rotates on the roller mount 48 on the longitudinal axis 50.

Typically, the first roller 30A also includes a stem portion 52 and an adjacent roller portion 54. The stem portion 52 elevates the roller portion 54 from the drive housing 12 for contact with the storage tape 26. The roller portion 54 controls lateral movement of the tape 26 (indicated by arrow L on Figure 2), i.e. movement perpendicular to the streaming direction of the tape 26. The roller portion 54 can be substantially spool-shaped, although other configurations for the roller portion 54 can be used, as explained below. The roller portion 54 and the stem portion 52 are preferably formed as a unitary structure, although each portion 52, 54, can be separately formed.

The roller portion 54 includes a perimeter surface 56, one or more gutters 58 and one or more flanges 60. As illustrated in Figures 3, 4 and 7, the perimeter surface 56 preferably lies on a circumference 62 of the roller portion 54 of the first roller 30A. The size and shape of the perimeter surface 56 can vary depending on the requirements of the tape drive 10. Typically, the perimeter surface 56 is roughly cylindrical in shape, although as explained in greater detail below, the grooves 32 are disposed into the otherwise substantially smooth perimeter surface 56. The perimeter surface 56 extends from a first edge 64 to a second edge 66 parallel to the longitudinal axis 50 of the first roller 30A.

Each gutter 58 is formed as a depression between one of the flanges 60 and one of the corresponding edges 64, 66, of the perimeter surface 56. The size and shape of the gutters 58 can vary. The gutters 58 each provide a typically obtuse-angled corner 68 to assist in inhibiting lateral tape motion during operation of the tape drive 10.

As stated previously, the first roller 30A includes one or more grooves 32 which are disposed into the perimeter surface 56. The grooves 32 are uniquely designed to inhibit at least three undesirable conditions: lateral tape motion, directional continuity shift and tape print through, as explained below.

"Lateral tape motion" refers to any deviation from the perfect plane path of the tape 26 as it travels between the cartridge 22 and the take-up reel 16. In other words, lateral tape motion is the peak-to-peak distance of movement of the tape 26 perpendicular to the longitudinal direction of motion of the tape 26 past the head assembly 14. Causes of lateral tape motion include any planar misalignment of the cartridge 22, the tape rollers 28, and or the take-up reel 16. Minimal perpendicular misalignment in all directions is particularly important to minimize lateral tape motion. Further, any perimeter surface 56 condition or anomaly, intentional or accidental, which tends to inflict a deviation from the perfect path of the tape 26 can cause lateral tape motion. For example, surface conditions resulting from the design of the tape rollers 28 or contamination and vibration can result in lateral tape motion.

"Directional continuity shift" ("DC shift") occurs when the tape rollers 28 tend to cause the tape 26 to move upward or downward, i.e. perpendicular to the direction of the streaming tape 26 across the head assembly 14. This can be caused by the orientation of the grooves 32 in conventional tape rollers 28, or due to other design problems that tend to force the tape 26 upward or downward. Reversal of the tape direction from forward to reverse or reverse to forward can in turn cause an abrupt change in the lateral tape motion, leading to DC shift. The result of DC shift is that a track 46 of data in one direction is not at the precise vertical location when read in the opposite direction, which can lead to reading and writing errors.

"Print through" occurs when one portion of a track 46 repeatedly comes in contact with a particular groove pattern causing permanent longitudinal deformation of the tape 26. Tape rollers 28 having a continuous, repetitious pattern can cause damage to the tape 26 when the tape 26 repeatedly streams across the same tape roller 28.

As provided above, the roller portion 54 includes one or more uniquely positioned grooves 32. The pattern of the grooves 32 in the present invention can vary depending upon the requirements of the guide assembly 20 and the tape drive 10. The embodiment illustrated in Figures 3 and 5-7 includes grooves 32 that are generally parallel to the direction of travel of the tape 26.

Each groove 32 has a groove length 74, a groove width 76 and a groove depth 78. The groove length 74 for each groove 32 is preferably less than the circumference 62 of the perimeter surface 56 of the first roller 30A. More preferably, the groove lengths 74 are within the range of between approximately 0.1 percent (0.1%) and ninety percent (90%) of the circumference 62 of the perimeter surface 56. Still more preferably, the groove lengths 74 are within the range of between approximately one percent (1%) and fifty percent (50%) of the circumference 62 of the perimeter surface 56. Most preferably, the groove lengths 74 are within the range of between approximately five percent (5%) and fifteen percent (15%) of the circumference 62 of the perimeter surface 56.

By way of example, a first roller 30A with a diameter 80 of approximately 0.6 inches preferably includes grooves 32 with groove lengths 74 of less than the circumference 62 of the first roller 30A. More preferably, the groove lengths 74 are between approximately 0.25 mm (0.01 inches) and 38 mm (1.5 inches). Still more preferably each of the groove lengths 74 are between approximately 1.27 mm (0.05 inches) and 12.7 mm (0.50 inches). Most preferably, the groove lengths 74 are between approximately 2.5 mm (0.10 inches) and 5.1 mm (0.20 inches). The groove length 74 of each of the grooves 32 on the first roller 30A can be identical. Alternatively, the groove lengths 74 on the first roller 30A can vary.

The groove widths 76 of each groove 32 can vary depending upon the requirements of the guide assembly 20 and the tape drive 10. Preferably, the groove width 76 of each groove 32 is within the range of between approximately 25 µm (0.001 inches) and 5.1 mm (0.2 inches). More preferably, the groove width 76 of each groove 32 is within the range of between approximately 127 µm (0.005 inches) and 2.5 mm (0.1 inches). Most preferably, the groove width 76 of each groove 32 is approximately 0.25 mm (0.01 inches). Typically, the groove width 76 of each groove 32 on the first roller 30A is the same. Alternatively, the groove widths 76 for each groove 32 can vary on the first roller 30A.

The groove depths 78 for each groove 32 can vary. Preferably, the groove depth 78 of each groove 32 is within the range of between approximately 2.5 µm (0.0001 inches) and 5.1 mm (0.2 inches) More preferably, the groove depth 78 of each groove 32 is within the range of between approximately 25 µm (0.001 inches) and 1.3 mm (0.05 inches). Most preferably, the groove depth 78 of each groove 32 is within the range of between approximately 0.13 mm (0.005 inches) and 0.38 mm (0.015 inches).

In one embodiment of the present invention, the groove depth 78 of each groove 32 varies over the length of the groove 32. As illustrated in Figure 4, each groove 32 can include two end segments 82 that are separated by a middle segment 84. The depth of the end segments 82 and the middle segment 84 can vary within one specific groove 32. Additionally, the depth of the end segments 82 and the middle segment 84 can vary between grooves 32. Figure 4 illustrates an embodiment where the groove depth 78 is greatest at the middle segment 84. Alternatively, the middle segment 84 can have a groove depth 78 that generally remains constant over the length of the groove 32. Moreover, the middle segment 84 can have a variable groove depth 78.

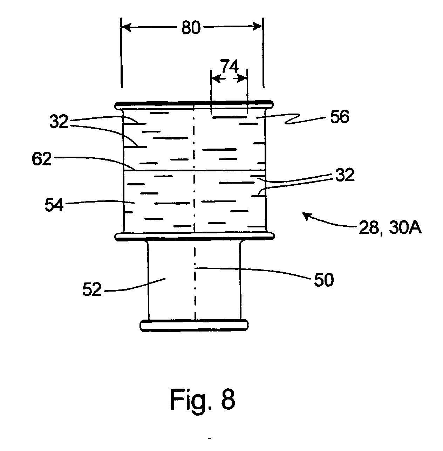

As illustrated in Figures 3 and 5-8, the grooves 32 are preferably aligned substantially parallel to the circumference 62 of the perimeter surface 56 of the first roller 30A. Stated another way, the grooves 32 form arcuate portions of parallel circumferences around the perimeter surface 56 of the first roller 30A. The arcuate portions can be semi-randomly distributed within a given circumference 62, i.e. having a repetitive random pattern as illustrated in Figure 8, and can further have different groove lengths 74 within a given circumference 62. On the other hand, the arcuate portions can each have substantially similar groove lengths 74 within the same circumference, forming a non-random pattern. For instance, Figure 4 illustrates that the circumferential positioning of the grooves 32 can be repeated every 60 degrees along the perimeter surface 56. Preferably, as shown in Figures 3, 5 and 6, arcuate portions of adjacent circumferences 62 are offset so that substantially similar groove lengths 74 do not occur immediately adjacent to one another.

Figures 3-7 illustrate an exemplar embodiment of the present invention. As an example, the first roller 30A includes a roller portion 54 with a diameter 80 of approximately 15 mm (0.60 inches). Referring to Figures 3, 5 and 6, the groove pattern includes twelve sectors 88 of nine substantially parallel, equal-length grooves 32, each having a groove separation 90 (shown on Figure 6) of 1.0 mm (0.04 inches) Each groove 32 has a groove width 76 of approximately 0.25 mm (0.01 inches). and a groove length 74 of approximately 4 mm (0.16 inches). Further, each groove 32 has a maximum groove depth 78 of approximately 0.28 mm (0.011 inches). Each sector 88 is alternately offset from the previous sector 88 by plus or minus 0.64 mm (0.025 inches) so that every other sector 88 includes identically configured grooves 32. As best illustrated in Figures 5 and 6, six alternating sectors 88 have an upper groove 92 that is approximately 0.8 mm (0.032 inches) from an upper flange 94, while the remaining six alternating sectors 88 have a lower groove 96 that is approximately 0.8 mm (0.032 inches) from a lower flange 98.

Each groove 32 also typically includes a groove bottom 100 and two groove sides 102. Preferably, the groove bottom 100 is substantially flat relative to the curvature on the perimeter surface 56. Alternatively, the groove bottom 100 can have a curvature. Typically, the groove sides 102 are generally parallel to and face each other, and are substantially perpendicular to the longitudinal axis 50 of the first roller 30A. Importantly, the groove bottom 100 can have a variable groove depth 78 over the length of the groove 32. Because the groove depth 78 illustrated in Figure 4 tapers from the maximum groove depth 78 of approximately 0.28 mm (0.011 inches) to zero at each end segment 82, air is less likely to become trapped within the grooves 32 than with grooves 32 which lack the variable groove depth 78. This embodiment typically includes a groove 32 where the groove bottom 100 is substantially planar, thereby providing a variable groove depth 78. The exemplar embodiment described above and illustrated in Figures 3-7 is provided as an example only, and represents one of many possible first roller 30A configurations.

The number of grooves 32 on the first roller 30A can vary depending upon the groove length 74, groove width 76, the size of the first roller 30A in the guide assembly 20, the requirements of the tape drive 10 and the thickness of the tape 26 utilized. The percentage of the perimeter surface 56 onto which the grooves 32 are disposed is preferably between the range of approximately one percent (1%) and forty percent (40%). More preferably, the percentage of the perimeter surface 56 onto which the grooves 32 are disposed is between the range of approximately five percent (5%) and twenty-five percent (25%).

The grooves 32 are dimensioned and positioned for venting of air captured between the perimeter surface 56 of the first roller 30A and the tape 26 during movement of the tape 26 across the perimeter surface 56. Because of the positioning of the grooves 32, and the groove length 74 of less than the circumference 62 of the perimeter surface 56, the incidence of print through is decreased. Thus, any given portion of the tape 26 will only contact one specific groove 32 once in a particular pass by the first roller 30A. Moreover, the likelihood that a particular portion of the tape 26 will repeatedly contact the same groove 32 is diminished due to the decreased groove length 74 and the semi-random, offset positioning of the grooves 32, as illustrated in Figure 8, for example.

In addition, because the grooves 32 are preferably oriented lengthwise substantially in the direction of the moving tape 26 as opposed to obliquely to the direction of the moving tape 26, no lateral force vector is applied to the tape 26. As a consequence, the streaming tape 26 is less susceptible to lateral tape motion and DC shift. The grooves 32 assist in maintaining travel of the tape 26 substantially in a direction perpendicular to the longitudinal axis 62 of the first roller 30A. In contrast, tape rollers 28 with obliquely positioned grooves 32 have a higher likelihood of moving the tape 26 upwards or downwards in the direction of the grooves 32, thereby causing a greater incidence of lateral tape motion and/or DC shift.

By decreasing the percentage of area of the perimeter surface 56 onto which grooves 32 are disposed, the first roller 30A can exert greater friction on the tape 26 without increasing print through errors. This feature is particularly important when decreasing the number of tape rollers 28 in the guide assembly 20. For example, if the number of tape rollers 28 is reduced from six to four, or four to two, a substantial decrease in the percentage of time the tape 26 is in contact with the tape rollers 28 occurs. Further, an increase in friction can enable the tape rollers 28 to be positioned in a less arcuate guide path than conventional tape guide assemblies 20, which can decrease the size of the tape drive 10.

Additionally, increased tape speeds require additional tape gripping capability for the tape rollers 28 because of the increased fluid flow between the tape 26 and the tape rollers 28. The unique positioning of the grooves 32 for the first roller 30A herein described provide additional tape gripping capability, even with tapes 26 having thicknesses of 13 µm (0.0005 inches) or less.

The present invention is also directed toward a method of manufacturing the first roller 30A. The specific method used in providing grooves 32 onto the perimeter surface 56 of the first roller 30A can vary. Preferably, the grooves 32 can be cut tangentially to the perimeter surface 56. These tangential cuts can be made with a cutting tool (not shown) such as a rotary saw or a spinning point tool, for example, provided the grooves 32 formed by the cutting tool have relatively shallow exit and entrance profiles.

Specifically, the first roller 30A can be fabricated on a CNC Vertical Milling Machine. The first roller 30A can be held stationary while the cutting tool such as a jeweler's slitting saw with a blade width (not shown) that approximates the eventual width of the grooves 32 performs repeated cuts into the perimeter surface 56. The cutting tool can be passed tangentially to the perimeter surface 56 to a maximum desired depth, i.e. 0.28 mm (0.011 inches), for example.

While the particular tape drive 10 and guide assembly 20 as herein shown and disclosed in detail is fully capable of obtaining the objects and providing the advantages herein before stated, it is to be understood that it is merely illustrative of the presently preferred embodiments of the invention and that no limitations are intended to the details of construction or design herein shown other than as described in the appended claims.

## Claims

1. A guide assembly (20) for reducing lateral movement of a storage tape (26) in a tape drive (10), the guide assembly (20) comprising:
a first roller (30A) including a perimeter surface (56), a circumference (62), a longitudinal axis (50) and a plurality of spaced-apart grooves (32) disposed into the perimeter surface (56), each of the grooves (32) being aligned substantially parallel to the circumference (62) and having a groove length (74) that is less than the circumference (62).

2. The guide assembly (20) of claim 1 wherein the grooves (32) are semi-randomly distributed on the perimeter surface (56).

3. The guide assembly (20) of claim 1 wherein the groove length (74) for at least one of the grooves (32) is between approximately 0.1 percent (0.1%) and ninety percent (90%) of the circumference (62).

4. The guide assembly (20) of claim 1 wherein the groove length (74) for at least one of the grooves (32) is between approximately one percent (1%) and fifty percent (50%) of the circumference (62).

5. The guide assembly (20) of claim 1 wherein the groove length (74) of at least one of the grooves (32) is between approximately 0.25 mm (0.01 inches) and 38 mm (1.5 inches).

6. The guide assembly (20) of claim 1 wherein the percentage of the perimeter surface (56) onto which grooves (32) are disposed is in the range of between approximately one percent (1%) and forty percent (40%).

7. The guide assembly (20) of claim 1 wherein the percentage of the perimeter surface (56) onto which grooves (32) are disposed is in the range of between approximately one percent (1%) and twenty-five percent (25%).

8. The guide assembly (20) of claim 1 further including a roller mount (48)
wherein the roller (30A) is rotatably mounted on the roller mount approximately on at least a portion of the longitudinal axis (30) of the first roller.

9. The guide assembly (20) of claim 1 wherein at least one of the grooves (32) has a groove depth (78) that varies between approximately zero and 0.5 mm (0.02 inches) along the length of each groove.

10. The guide assembly(20) of claim 1 further comprising a second roller (30B) including a perimeter surface, a circumference, a longitudinal axis and a groove disposed into the perimeter surface, the groove having a groove length that is less than the circumference.

11. A tape drive (10) including the guide assembly (20) of claim 1, a take-up reel (16) and a head assembly (14).

12. The guide assembly (20) of any of claims 1 to 7, wherein at least one groove (32) has a groove depth (78) that varies along the length of the groove (32).

13. The guide assembly (20) of claim 12 wherein each of the plurality of spaced-apart grooves (32) has a groove depth (78) that varies along the length of the groove (32).

14. The guide assembly (20) of claim 12 further comprising a second roller (30B) including a perimeter surface (56), a circumference (62), a longitudinal axis (50) and a groove (32) disposed into the perimeter surface (56), the groove (32) having a groove depth (78) that varies along the length of the groove (32).

15. The guide assembly (20) of claim 12 wherein the groove depth (78) varies between approximately zero and 1.3 mm (0.05 inches).

16. A tape drive (10) including the guide assembly (20) of claim 12 and a take-up reel (16) and a head assembly (14).

17. The guide assembly (20) of claim 1 wherein each groove (32) has (i) a groove depth (78) that varies between approximately zero and 0.5 mm (0.02 inches), (ii) a groove length of between approximately 2.5 mm (0.1 inches) and 7.6 mm (0.3 inches) and (iii) a groove width of between approximately 0.13 mm (0.005 inches) and 0.38 mm (0.015 inches).

18. A method of manufacturing a roller (30A) for use in a guide assembly (20) of a tape drive (10), the method comprising the steps of:
providing a roller portion (54) having a circumference (62) and a perimeter surface (56); and
forming a plurality of spaced-apart grooves into the perimeter surface so each of the grooves has a groove length that is less than the circumference (62), wherein each of the grooves (32) is aligned substantially parallel to the circumference.

19. The method of claim 18 wherein each groove (32) has a groove depth (78) that varies along the length of the groove (32).

## Patentansprüche

1. Führungsanordnung (20) zum Verringern einer Lateralbewegung eines Speicherbands (26) in einem Bandlaufwerk (10), wobei die Führungsanordnung (20) umfasst:
eine erste Rolle (30A) mit einer Umfangsfläche (56), einem Umfang (62), einer Longitudinalachse (50) und mehreren beabstandeten Nuten bzw. Rillen (32), die in die Umfangsfläche (56) eingebracht sind, wobei jede der Nuten bzw. Rillen (32) im wesentlichen parallel zu dem Umfang (62) angeordnet ist und eine Nut- bzw. Rillenlänge (74) aufweist, die geringer ist als der Umfang (62).

2. Führungsanordnung (20) nach Anspruch 1, wobei die Nuten bzw. Rillen (32) halb-zufällig auf der Umfangsfläche (56) verteilt sind.

3. Führungsanordnung (20) nach Anspruch 1, wobei die Nut- bzw. Rillenlänge (74) für mindestens eine der Nuten bzw. Rillen (32) zwischen etwa 0,1 Prozent (0,1%) und neunzig Prozent (90%) des Umfangs (62) beträgt.

4. Führungsanordnung (20) nach Anspruch 1, wobei die Nuten- bzw. Rillenlänge (74) für mindestens eine der Nuten bzw. Rillen (32) zwischen etwa einem Prozent (1%) und fünfzig Prozent (50%) des Umfangs (62) beträgt.

5. Führungsanordnung (20) nach Anspruch 1, wobei die Nutenlänge (74) für mindestens eine der Nuten bzw. Rillen (32) zwischen etwa 0,25 mm (0,01 Inch) und 38 mm (1,5 Inch) beträgt.

6. Führungsanordnung (20) nach Anspruch 1, wobei der Prozentsatz der Umfangsfläche (56), auf dem die Nuten bzw. Rillen (32) angeordnet sind, im Bereich zwischen etwa einem Prozent (1%) und vierzig Prozent (40%) liegt.

7. Führungsanordnung (20) nach Anspruch 1, wobei der Prozentsatz der Umfangsfläche (56), auf dem die Nuten bzw. Rillen (32) angeordnet sind, im Bereich zwischen etwa einem Prozent (1%) und fünfundzwanzig Prozent (25%) liegt.

8. Führungsanordnung (20) nach Anspruch 1, ferner mit einer Rollenhalterung (48), wobei die Rolle (30A) an der Rollenhalterung in etwa an mindestens einem Abschnitt der Longitudinalachse (30) der ersten Rolle drehbar angebracht ist.

9. Führungsanordnung (20) nach Anspruch 1, wobei mindestens eine der Nuten bzw. Rillen (32) eine Nuttiefe (78) aufweist, die zwischen etwa Null und 0,5 mm (0,02 Inch) entlang der Länge jeder Nut bzw. Rille variiert.

10. Führungsanordnung (20) nach Anspruch 1, ferner mit einer zweiten Rolle (30B), die eine Umfangsfläche, einen Umfang, eine Longitudinalachse und eine in der Umfangsfläche angeordnete Nut bzw. Rille aufweist, wobei die Nut bzw. Rille eine Nut- bzw. Rillenlänge hat, die geringer ist als der Umfang.

11. Bandlaufwerk (10) mit der Führungsanordnung (20) nach Anspruch 1, einer Aufwickelspule (16) und einer Kopfanordnung (14).

12. Führungsanordnung (20) nach einem der Ansprüche 1 bis 7, wobei mindestens eine Nut bzw. Rille (32) eine Nut- bzw. Rillentiefe (78) aufweist, die entlang der Länge der Nut bzw. Rille (32) variiert.

13. Führungsanordnung (20) nach Anspruch 12, wobei jede der mehreren beabstandeten Nuten bzw. Rillen (32) eine Nut- bzw. Rillentiefe (78) aufweist, die entlang der Länge der Nut bzw. Rille (32) variiert.

14. Führungsanordnung (20) nach Anspruch 12, ferner mit einer zweiten Rolle (30B), die eine Umfangsfläche (56), einen Umfang (62), eine Longitudinalachse (50) und eine in der Umfangsfläche (56) angeordnete Nut bzw. Rille (32) aufweist, wobei die Nut bzw. Rille eine Nut- bzw. Rillentiefe (78) hat, die entlang der Länge der Nut (32) variiert.

15. Führungsanordnung (20) nach Anspruch 12, wobei die Nut- bzw. Rillentiefe (78) zwischen etwa Null und 1,3 mm (0,05 Inch) variiert.

16. Bandlaufwerk (10) mit der Führungsanordnung (20) nach Anspruch 12 und einer Aufwickelspule (16) und einer Kopfanordnung (14).

17. Führungsanordnung (20) nach Anspruch 1, wobei jede Nut bzw. Rille (32) aufweist:
(i) eine Nut- bzw. Rillentiefe (78), die zwischen etwa Null und 0,5 mm (0,02 Inch) variiert,
(ii) eine Nut- bzw. Rillenlänge zwischen etwa 2,5 mm (0,1 Inch) und 7,6 mm (0,3 Inch), und
(iii) eine Nut- bzw. Rillenbreite zwischen etwa 0,13 mm (0,005 Inch) und 0,38 mm (0,015 Inch).

18. Verfahren zur Herstellung einer Rolle (30A) zur Verwendung in einer Führungsanordnung (20) eines Bandlaufwerks (10), wobei das Verfahren folgende Schritte umfasst:
Vorsehen eines Rollenabschnitts (54) mit einem Umfang (62) und einer Umfangsfläche (56), und
Ausbilden mehrerer beabstandeter Nuten bzw. Rillen in der Umfangsfläche, so dass jede der Nuten bzw. Rillen eine Nut- bzw. Rillenlänge aufweist, die geringer ist als der Umfang (62), wobei jede der Nuten bzw. Rillen (32) im wesentlichen parallel zu dem Umfang ausgerichtet ist.

19. Verfahren nach Anspruch 18, wobei jede Nut bzw. Rille (32) eine Nut- bzw. Rillentiefe (78) aufweist, die entlang der Länge der Nuten bzw. Rillen (32) variiert.

## Revendications

1. Ensemble de guidage (20) pour réduire le mouvement latéral d'une bande de stockage (26) dans un lecteur de bande (10), l'ensemble de guidage (20) comprenant:
un premier rouleau (30A) comprenant une surface circonférencielle (56), une circonférence (62), un axe longitudinal (50) et une pluralité de rainures (32) espacées, disposées dans la surface circonférencielle (56), chacune des rainures (32) étant alignée de manière sensiblement parallèle à la circonférence (62) et ayant une longueur (74) de rainure qui est inférieure à la circonférence (62).

2. Ensemble de guidage (20) selon la revendication 1, dans lequel les rainures (32) sont réparties de manière semi-aléatoire sur la surface circonférencielle (56).

3. Ensemble de guidage (20) selon la revendication 1, dans lequel la longueur (74) de rainure pour au moins l'une des rainures (32) est comprise entre approximativement 0,1 pourcent (0,1 %) et quatre vingt dix pourcent (90 %) de la circonférence (62).

4. Ensemble de guidage (20) selon la revendication 1, dans lequel la longueur (74) de rainure pour au moins l'une des rainures (32) est comprise entre approximativement un pourcent (1 %) et cinquante pourcent (50 %) de la circonférence (62).

5. Ensemble de guidage (20) selon la revendication 1, dans lequel la longueur (74) de rainure d'au moins l'une des rainures (32) est comprise entre approximativement 0,25 mm (0,01 pouce) et 38 mm (1,5 pouce).

6. Ensemble de guidage (20) selon la revendication 1, dans lequel le pourcentage de la surface circonférencielle (56) sur laquelle les rainures (32) sont disposées est compris entre approximativement un pourcent (1 %) et quarante pourcent (40 %).

7. Ensemble de guidage (20) selon la revendication 1, dans lequel le pourcentage de la surface circonférencielle (56) sur laquelle les rainures (32) sont disposées est compris entre approximativement un pourcent (1 %) et vingt cinq pourcent (25 %).

8. Ensemble de guidage (20) selon la revendication 1, comprenant en outre un dispositif de montage de rouleau (48) dans lequel le rouleau (30A) est monté de manière rotative sur le dispositif de montage de rouleau approximativement sur au moins une partie de l'axe longitudinal (30) du premier rouleau.

9. Ensemble de guidage (20) selon la revendication 1, dans lequel au moins l'une des rainures (32) a une profondeur (78) de rainure qui varie entre approximativement zéro et 0,5 mm (0,02 pouce) sur la longueur de chaque rainure.

10. Ensemble de guidage (20) selon la revendication 1, comprenant en outre un second rouleau (30B) comprenant une surface circonférencielle, une circonférence, un axe longitudinal et une rainure disposée dans la surface circonférencielle, la rainure ayant une longueur de rainure qui est inférieure à la circonférence.

11. Lecteur de bande (10) comprenant l'ensemble de guidage (20) selon la revendication 1, une bobine réceptrice (16) et un ensemble de tête (14).

12. Ensemble de guidage (20) selon l'une quelconque des revendications 1 à 7, dans lequel au moins une rainure (32) a une profondeur (78) de rainure qui varie sur la longueur de la rainure (32).

13. Ensemble de guidage (20) selon la revendication 12, dans lequel chaque rainure de la pluralité de rainures (32) espacées a une profondeur (78) de rainure qui varie sur la longueur de la rainure (32).

14. Ensemble de guidage (20) selon la revendication 12, comprenant en outre un second rouleau (30B) comprenant une surface circonférencielle (56), une circonférence (62), un axe longitudinal (50) et une rainure (32) disposée dans la surface circonférencielle (56) et la rainure (32) ayant une profondeur (78) de rainure qui varie sur la longueur de la rainure (32).

15. Ensemble de guidage (20) selon la revendication 12, dans lequel la profondeur (78) de rainure varie entre approximativement zéro et 1,3 mm (0,05 pouce).

16. Lecteur de bande (10) comprenant l'ensemble de guidage (20) selon la revendication 12 et une bobine réceptrice (16) et un ensemble de tête (14).

17. Ensemble de guidage (20) selon la revendication 1, dans lequel chaque rainure (32) a (i) une profondeur (78) de rainure qui varie entre approximativement zéro et 0,5 mm (0,02 pouce), (ii) une longueur de rainure comprise entre approximativement 2,5 mm (0, 1 pouce) et 7,6 mm (0,3 pouce) et (iii) une largeur de rainure comprise entre approximativement 0,13 mm (0,005 pouce) et 0,38 mm (0,015 pouce).

18. Procédé permettant de fabriquer un rouleau (30A) destiné à être utilisé dans un ensemble de guidage (20) d'un lecteur de bande (10), le procédé comprenant les étapes consistant à :
prévoir une partie de rouleau (54) ayant une circonférence (62) et une surface périmètrale (56) ; et
former une pluralité de rainures espacées dans la surface circonférencielle de sorte que chacune des rainures a une longueur de rainure qui est inférieure à la circonférence (62), dans lequel chacune des rainures (32) est alignée d'une manière sensiblement parallèlement à la circonférence.

19. Procédé selon la revendication 18, dans lequel chaque rainure (32) a une profondeur (78) de rainure qui varie sur la longueur de la rainure (32).
